Europäisches Patentamt

European Patent Office

Office européen des brevets

(19)

(11) Publication number : **0 492 001 B1**

(12) **EUROPEAN PATENT SPECIFICATION**

(45) Date of publication of patent specification :
07.07.93 Bulletin 93/27

(51) Int. Cl.⁵ : **C08L 83/04,** C08L 101/00,
// (C08L83/04, 101:00)

(21) Application number : 90125754.3

(22) Date of filing : 28.12.90

(54) **Silicone-modified thermoplastic resin.**

(43) Date of publication of application :
01.07.92 Bulletin 92/27

(45) Publication of the grant of the patent :
07.07.93 Bulletin 93/27

(84) Designated Contracting States :
BE DE FR GB IT NL

(56) References cited :
EP-A- 0 162 211
EP-A- 0 242 037
EP-A- 0 290 230
DE-B- 1 066 749
FR-A- 2 406 650
US-A- 3 239 576

(73) Proprietor : **Dow Corning Toray Silicone
Company, Limited**
**Mitsui Bldg. No. 6, 2-3-16,**
**Nihonbashi-Muromachi, Chuo-Ku**
**Tokyo 103 (JP)**

(72) Inventor : **Furukawa, Haruhiko**
**6,1-chome, Yushudai Nishi**
**Ishihara-Shi, Chiba pref. (JP)**
Inventor : **Imai, Takeshi**
**8-18, 2-chome, Yushudai Nishi**
**Ichihara-Shi, Chiba pref. (JP)**

(74) Representative : **Spott, Gottfried, Dr. et al**
**Spott Weinmiller & Partner**
**Sendlinger-Tor-Platz 11**
**W-8000 München 2 (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a thermoplastic resin composition. More particularly, this invention relates to a highly moldable silicone-modified thermoplastic resin composition which affords high-quality moldings.

There have been numerous attempts in the thermoplastics sector directed toward the realization of particular molding process characteristics (e. g., mold releaseability, shortening of the molding time and dimensional stability) and directed toward the development of a particular performance by the molding itself (e. g., surface lubricity and impact resistance) through the internal addition of organopolysiloxane to thermoplastic resin. Moreover, many types of organopolysiloxanes have been employed for these applications, e. g., straight-chain organopolysiloxanes, organopolysiloxane resins and curable organopolysiloxanes. However, thermoplastic resin compositions prepared by the internal addition of such organopolysiloxanes are prone to cause mold staining during the molding process. In addition, the injection molding of such compositions yields moldings which lack surface gloss, and in conspicuous cases the development of silver streaking is often observed. These are, of course, undesirable from the viewpoint of the external appearance. Furthermore, these moldings have a low weld line strength.

The present inventors carried out extensive research in pursuit of a solution to the aforementioned problems, and discovered as a result that these problems could be eliminated in a single stroke by the internal addition of a specific organopolysiloxane to the thermoplastic resin.

The present invention takes as its object the introduction of a thermoplastic resin composition which is endowed with the advantageous attributes characteristic of organopolysiloxane without, at the same time, manifesting the various problems appearing in the molding process as discussed above. The invention therefore relates to a thermoplastic resin composition comprising:

(A) 100 parts by weight of a thermoplastic resin; and

(B) from 0.1 to 120 parts by weight of an organopolysiloxane having a viscosity of at least 150,000 $mm^2s^{-1}$ (centistokes) at 25°C, said organopolysiloxane containing no more than 2,000 parts per million by weight of low molecular weight siloxane species having a vapor pressure of $\geqq$ 13.33 kPa (10 mm Hg) at 200°C.

To explain the preceding in greater detail, the thermoplastic resin comprising the component (A) used by the present invention need merely be a moldable thermoplastic resin and no particular restrictions pertain thereto. Such thermoplastic resins are exemplified by polyolefin resins, such as polypropylene and polyethylene; styrene resins, such as polystyrene resins and ABS resins; polyester resins, such as polyethylene terephthalate resins; polyamide resins, such as nylon 66 resin; polyoxyalkylene resins, such as polyacetal resins; mixtures of these resins; and their copolymers and rubber-modified materials. Among these, component (A) is preferably a thermoplastic resin which is typically used for injection molding.

The organopolysiloxane comprising component (B) used by the present invention must contain no more than 2,000 parts per million (ppm) by weight of low-molecular-weight siloxane species having a vapor pressure $\geqq$ 13.33 kPa (10 mmHg) at 200 degrees Centigrade. When the content of such a low-molecular-weight siloxane exceeds 2,000 ppm, mold staining during molding tends to appear, silver streaking on the surface of the molding tends to be produced and the weld line strength of the molding is reduced.

The above mentioned low-molecular-weight siloxane species may be linear or cyclic, and they are exemplified by cyclic siloxanes, represented by the formula

$$[(CH_3)_2SiO]_n$$

wherein n is an integer having a value of 3 to 25, and by straight-chain siloxanes represented by the formula

$$CH_3[(CH_3)_2SiO]_mSi(CH_3)_3$$

wherein m is an integer having a value of 1 to about 25. A portion of the methyl groups in these siloxanes may be replaced by other organic groups. This low-molecular-weight siloxane is concretely exemplified by octamethyltetracyclosiloxane, decamethylpentacyclosiloxane, dodecamethylhexacyclosiloxane and trimethylsiloxy-terminated dimethylpolysiloxanes. The content of this low-molecular-weight siloxane in component (B) can be measured by solvent extraction of the low-molecular-weight siloxane from the organopolysiloxane and analysis of the amount extracted by gas chromatography. Otherwise, it can also be measured by collecting the gas produced during mixing and molding of the organopolysiloxane-containing thermoplastic resin composition and analyzing this gas by gas chromatography in order to measure its content of low-molecular-weight siloxane.

It is essential that the organopolysiloxane comprising component (B) have a viscosity at 25 degrees Centigrade of at least 150,000 $mm^2s^{-1}$ (centistokes), but the viscosity is preferably at least 300,000 $mm^2s^{-1}$ (centistokes) and values of at least 1,000,000 $mm^2s^{-1}$ (centistokes) are particularly preferred. When its viscosity falls below about 150,000 $mm^2s^{-1}$ (centistokes) problems, such as organopolysiloxane bleed-out from the obtained molding, tend to arise. The organopolysiloxane under consideration may be a linear organopolysiloxane or branched organopolysiloxane. Examples include dimethylpolysiloxane, methylphenylpolysiloxane, methylphenylsiloxane-dimethylsiloxane copolymers, diphenylsiloxane-dimethylsiloxane copolymers.

Among these, dimethylpolysiloxanes having a viscosity of at least 1,000,000 $mm^2s^{-1}$ (centistokes) at 25 degrees Centigrade are preferred. The organopolysiloxane (B) used by the present invention can be obtained by removal of the low-molecular-weight siloxane from organopolysiloxane prepared by conventional methods, and numerous methods are available for the removal of this low-molecular-weight siloxane. The optimal method will vary with the type of organopolysiloxane. The following methods are provided as examples of removal from straight-chain organopolysiloxanes having relatively low viscosities: the organopolysiloxane is made into a thin film and stripped by heating at 180 to 300 degrees Centigrade under a vacuum below 0.6665 kPa (0.5 mmHg); or, the low-molecular-weight siloxane is extracted by addition to the organopolysiloxane of organic solvent which dissolves the low-molecular-weight siloxane but which does not dissolve the high-molecular-weight siloxane, for example, organic solvents such as methanol or ethanol. When one is dealing with high-viscosity material, the organopolysiloxane is first dissolved in toluene. Methanol or ethanol is then added to this solution and the high-molecular-weight siloxane is precipitated and is separated from the upper-layer solvent phase. The low-molecular-weight siloxane is, in this case, extracted into the aforesaid solvent phase. Then, the organic solvent remaining in the high-molecular-weight siloxane is removed by such methods as stripping.

With regard to the blending proportion for component (B), when too little is admixed one does not observe the appearance of the functional effects discussed above which derive from the admixture of organopolysiloxane. When too much is used, the original characteristics associated with the thermoplastic resin composition are lost. Accordingly, component (B) should be admixed within the range of 0.1 to 120 weight parts, preferably 0.1 to 70 weight parts, per 100 weight parts of component (A).

The thermoplastic resin composition of the present invention can be easily prepared by mixing the above-discussed component (A) and component (B) to homogeneity using those mixers or mixer-kneaders known in the art for the melt-mixing/kneading of thermoplastic resin.

The present invention's thermoplastic resin composition has the same performance as thermoplastic resin which contains prior organopolysiloxane as an internal additive. However, the problems which frequently appear with these prior compositions, such as mold staining and poor-quality moldings, do not arise with the present invention's thermoplastic resin composition. As a consequence, the application limitations associated with thermoplastic resin compositions containing prior organopolysiloxane internal additive do not apply to the present invention's thermoplastic resin composition, and the latter can be used in various sectors such as the household-products sector, electric/electronic components sector, building materials sector.

The present invention is explained in greater detail below through illustrative examples.

In the examples, the viscosity is the value measured at 25 degrees Centigrade and all parts and percentages are on a weight basis, unless indicated to the contrary.

## Reference Example 1

One kilogram of a straight-chain dimethylpolysiloxane having a viscosity of 5,000,000 $mm^2s^{-1}$ (centistokes) (contained 35,000 ppm low-molecular-weight siloxane with a vapor pressure of $\geq$ 13.33 kPa (10 mmHg) at 200 degrees Centigrade) and 2 kg of toluene were introduced into a 10 L flask, and dissolution was carried out over a two hour period by stirring. Six kilograms of ethanol was then added to this with stirring for 10 minutes, followed by standing for 10 minutes in order to precipitate the dimethylpolysiloxane component as the lower layer. This lower layer was collected from the bottom of the flask, and the toluene and ethanol were removed at 50 degrees Centigrade/13.33 Pa (0.1 mmHg) using an evaporator to afford 930 g of an extracted dimethylpolysiloxane. In order to quantitate the low-molecular-weight siloxane, this same extraction process was conducted on a sample of the extracted dimethylpolysiloxane, and the ethanol phase separating as the upper layer was analyzed by gas chromatography. The total amount of low-molecular-weight siloxane having a vapor pressure of $\geq$ 13.33 kPa (10 mmHg) at 200 degrees Centigrade present in this extracted organopolysiloxane was 500 ppm.

## Example 1

Using a high-speed fluidizing mixer (25 liter Henschel mixer), 150 g of the straight-chain extracted dimethylpolysiloxane obtained in Reference Example 1 (contained 500 ppm low-molecular-weight siloxane with vapor pressure of $\geq$ 13.33 kPa (10 mmHg) at 200 degrees Centigrade) and 2,850 g of general-purpose injection grade polypropylene pellets (Noblen from Sumitomo Chemical Company, Japan) were mixed at room temperature for 10 minutes at 700 rpm. This mixture was then supplied to a twin-screw mixer (cylinder and extrusion die temperature = 210 degrees Centigrade) and extruded into a strand which was water-cooled, cut up with a pelletizer and dried. The resulting polypropylene pellets were injection molded at a cylinder temperature of 210 degrees Centigrade and a mold temperature of 50 degrees Centigrade using a screw-type injection molder to give a number 2 dumbbell as stipulated in JIS K 7113, "Methods for the Tensile Testing of Plastics." In this case, two mold gates were set up (in the grip regions) for each specimen, which resulted in the formation of a weld line approximately at the center between the indicator lines of the dumbbell molding. In addition, the quantity of gas produced during molding was measured as follows. First, while the nozzle was disconnected from the mold, the produced gas was collected at the location as near as possible to the tip of the nozzle while the thermoplastic resin composition was being continuously extruded. This capture was carried out using a hose packed with active carbon and attached to the opening of a quantitative pump for gas capture which had a suction capacity of approximately 100 cc/minute (suction time = 5 minutes). The active carbon was then extracted with carbon disulfide, and the quantity of low-molecular-weight siloxane was measured by gas chromatography. The external appearance of the molding and the surface of the mold after molding were also evaluated. Otherwise, zones of mold staining were washed with n-hexane and the wash solution was collected, and evaporated and its components identified by IR spectroscopy. In order to measure the weld line strength, tensile strength measurement was conducted according to the method stipulated in K 7113 using the aforementioned dumbbell. The various measurement results are reported in Table 1.

### (Comparison) Example 1

For comparison, moldings were prepared as above, but using the straight-chain dimethylpolysiloxane of Reference Example 1 prior to removal of the low-molecular-weight siloxane (i. e., quantity of low-molecular-weight siloxane having a vapor pressure of $\geq$ 13.33 kPa (10 mmHg) at 200 degrees Centigrade = 35,000 ppm) in place of the straight-chain dimethylpolysiloxane from which the low-molecular-weight siloxane had been removed. The various evaluations were conducted by the same methods as above, and these results are also reported in Table 1.

## Table 1

|  | Example 1 | Comparison Example 1 |
|---|---|---|
| quantity of low-molecular-weight siloxane in evolved gas (ppm) | 6 | 450 |
| external appearance of the surface of the molding | excellent | poor (silver streaking appeared) |
| external appearance of the surface of the mold | excellent | poor[1] |
| tensile strength $(kg/mm^2)$ | 3.0 | 2.1[2] |

1) The stain was recovered and identified, and it was confirmed that the majority was low-molecular-weight dimethylsiloxane.

2) The dumbbell molding fractured from the weld line region.

### Example 2

Moldings were prepared as in Example 1 with the following modifications: a nonreinforced injection-molding grade polyamide resin (Amilan 66 from Toray Kabushiki Kaisha, Japan) was used instead of the polypropylene pellets, the cylinder temperature during mixing and the cylinder temperature during molding were 280 degrees Centigrade, and the mold temperature was 60 degrees Centigrade. The same evaluations were conducted as in Example 1, and these results are reported in Table 2.

### (Comparison) Example 2

For comparison, the various evaluations were conducted as above in Example 2, but using the straight-chain dimethylpolysiloxane prior to removal of the low-molecular-weight siloxane (low-molecular-weight siloxane content = 35,000 ppm) instead of the straight-chain dimethylpolysiloxane from which the low-molecular-weight siloxane had been removed.

These results are also reported in Table 2.

### Table 2

|  | Example 2 | Comparison Example 2 |
|---|---|---|
| quantity of low-molecular-weight siloxane in evolved gas (ppm) | 10 | 750 |
| external appearance of the surface of the molding | excellent | poor (silver streaking appeared) |
| external appearance of the surface of the mold | excellent | poor[1] |
| tensile strength $(kg/mm^2)$ | 7.1 | 5.3[2] |

1) The stain was recovered and identified, and it was confirmed that the majority was low-molecular-weight dimethylsiloxane.

2) The dumbbell molding fractured from the weld line region.

### Claims

1. A thermoplastic resin composition comprising:
   (A) 100 parts by weight of a thermoplastic resin; and
   (B) from 0.1 to 120 parts by weight of an organopolysiloxane having a viscosity of at least 150,000 $mm^2s^{-1}$ (centistokes) at 25°C, said organopolysiloxane containing no more than 2,000 parts per million by weight of low molecular weight siloxane species having a vapor pressure of $\geq$ 13.33 kPa (10 mm Hg) at 200°C.

2. The thermoplastic resin composition according to Claim 1, in which said organopolysiloxane (B) is selected from the group consisting of dimethylpolysiloxane, methylphenylsiloxane-dimethylsiloxane copolymer and diphenylsiloxane-dimethylsiloxane copolymer.

**Patentansprüche**

1.  Thermoplastische Harzzusammensetzung aus
    (A) 100 Gewichtsteilen eines thermoplastischen Harzes und
    (B) 0,1 bis 120 Gewichtsteilen eines Organopolysiloxans mit einer Viskosität von wenigstens 150 000 $mm^2 s^{-1}$ (Centistoke) bei 25°C, wobei dieses Organopolysiloxan nicht mehr als 2 000 Teile pro Million Gewichtsteile an niedermolekularen Siloxanarten enthält, die einen Dampfdruck von 13,33 kPa (10 mm Hg) bei 200°C haben.

2.  Thermoplastische Harzzusammensetzung nach Anspruch 1, worin das Organopolysiloxan (B) ausgewählt ist aus der aus Dimethylpolysiloxan, Methylphenylsiloxan-Dimethylsiloxan-Copolymerisat und Diphenylsiloxan-Dimethylsiloxan-Copolymerisat bestehenden Gruppe.


**Revendications**

1.  Une composition de résine thermoplastique comprenant :
    (A) 100 parties en poids d'une résine thermoplastique ; et
    (B) 0,1 à 120 parties en poids d'un organopolysiloxane ayant une viscosité d'au moins 150 000 $mm^2s^{-1}$ (centistokes) à 25°C, ledit organopolysiloxane ne contenant pas plus de 2000 parties par million en poids d'espèces de siloxanes de bas poids moléculaire ayant une pression de vapeur $\geqq$13,33 hPa (10 mm de Hg) à 200°C.

2.  La composition de résine thermoplastique selon la revendication 1, dans laquelle ledit organopolysiloxane (B) est choisi dans le groupe formé par un diméthylpolysiloxane, un copolymère méthylphénylsiloxane-diméthylsiloxane et un copolymère diphénylsiloxane-diméthylsiloxane.